# EUROPÄISCHE PATENTANMELDUNG

(11) **EP 4 810 774 A1**
(43) Veröffentlichungstag der Anmeldung: **23.09.2026**
(21) Anmeldenummer: 26165530.2
(22) Anmeldetag: 17.03.2026
(51) Int. Cl.: F02C 3/10, F01D 5/14, F02C 3/14

(54) **WELLENLEISTUNGSTRIEBWERK**

(30) Priorität: 19.03.2025 DE 102025110614
(71) Anmelder: MTU Aero Engines AG, 80995 München (DE)
(72) Erfinder: Trübenbach, Jens, 80995 München (DE); Metscher, Martin, 80995 München (DE); Bijewitz, Julian, 80995 München (DE)

(57) **Zusammenfassung**

Ein Wellenleistungstriebwerk weist einen Verdichter (1), eine Brennkammer (2), eine mit dem Verdichter (1) gekoppelte Hochdruckturbine (30) und eine mit einer Abtriebswelle (5) des Triebwerks gekoppelte Niederdruckturbine (40) auf, wobei Laufschaufeln (31, 32, 41, 42, 43) der Hoch- und Niederdruckturbine in einem Strömungskanal (60) angeordnet sind, wobei ein radialer Abstand einer radial inneren Kontur (62) des Strömungskanals von einer Rotationsachse (A) des Triebwerks zwischen einer stromaufwärtigsten Stufe (410) und einer stromabwärtigsten Stufe (430) der Niederdruckturbine (40) ein Maximum (Rₘₐₓ) aufweist. Die Erfindung betrifft außerdem einen Hubschrauber mit dem Wellenleistungstriebwerk.

## Beschreibung

Die vorliegende Erfindung betrifft ein Wellenleistungstriebwerk, insbesondere für einen Hubschrauber.

Eine Aufgabe einer Ausführung der vorliegenden Erfindung ist es, ein Wellenleistungstriebwerk zu verbessern.

Diese Aufgabe wird durch ein Wellenleistungstriebwerk mit den Merkmalen des Anspruchs 1 gelöst. Anspruch 12 stellt einen Hubschrauber mit einem hier beschriebenen Wellenleistungstriebwerk unter Schutz. Die Unteransprüche betreffen vorteilhafte Weiterbildungen.

Nach einer Ausführung der vorliegenden Erfindung weist ein Wellenleistungstriebwerk auf:
- einen Verdichter;
- eine Brennkammer;
- eine mit diesem Verdichter gekoppelte Hochdruckturbine; und
- eine mit einer Abtriebswelle des Triebwerks gekoppelte Niederdruckturbine, die in einer Ausführung stromabwärts der Hochdruckturbine angeordnet ist.

Nach einer Ausführung der vorliegenden Erfindung sind
- Laufschaufeln der Hochdruckturbine, die Strömungsenergie eines die Turbinen durchströmenden Arbeitsgases in mechanische bzw. Wellenarbeit zum Antreiben des mit der Hochdruckturbine gekoppelten Verdichters umsetzen bzw. hierzu eingerichtet sind; und
- Laufschaufeln der Niederdruckturbine, die Strömungsenergie des die Turbinen durchströmenden Arbeitsgases in mechanische bzw. Wellenarbeit zum Antreiben der mit der Niederdruckturbine gekoppelten Abtriebswelle umsetzen bzw. hierzu eingerichtet sind,
in einem, vorzugsweise gemeinsamen, Strömungskanal angeordnet, der in einer Ausführung einen Übergangsbereich zwischen einer stromabwärtigsten bzw. letzten Stufe der Hochdruckturbine und einer stromaufwärtigsten bzw. vordersten Stufe der Niederdruckturbine, vorzugsweise von der stromabwärtigsten Stufe der Hochdruckturbine bis zu der stromaufwärtigsten Stufe der Niederdruckturbine, aufweist.

"Stromaufwärts" bzw. "stromabwärts" beziehen sich insbesondere auf eine (normale bzw. Auslegungs)Durchströmung(srichtung) des Wellentriebwerks von einem Triebwerkseingang zu einem Triebwerksausgang bzw. von dem Verdichter in die Brennkammer, von der Brennkammer in die Hochdruckturbine und von der Hochdruckturbine weiter in die Niederdruckturbine. Eine Stufe im Sinne der vorliegenden Erfindung umfasst in einer Ausführung in Umfangsrichtung verteilte und/oder auf derselben axialen Position angeordnete Laufschaufeln, kann insbesondere hieraus bestehen bzw. durch diese Laufschaufeln gebildet bzw. definiert sein. In einer Weiterbildung können stromaufwärts der Laufschaufeln einer oder mehrerer Stufen der Hochdruckturbine und/oder stromaufwärts der Laufschaufeln einer oder mehrerer Stufen der Niederdruckturbine Leitschaufeln angeordnet sein. Zusätzlich oder alternativ können in einer Weiterbildung stromabwärts der Laufschaufeln einer oder mehrerer Stufen der Hochdruckturbine und/oder stromabwärts der Laufschaufeln einer oder mehrerer Stufen der Niederdruckturbine Leitschaufeln angeordnet sein.

Nach einer Ausführung der vorliegenden Erfindung weist ein radialer Abstand einer radial inneren Kontur des Strömungskanals von einer Rotationsachse des Triebwerks, in einer Ausführung der Hoch- und/oder der Niederdruckturbine, zwischen einer stromaufwärtigsten bzw. vordersten Stufe der Niederdruckturbine und einer stromabwärtigsten bzw. letzten Stufe der Niederdruckturbine ein, in einer Ausführung lokales oder globales, Maximum, vorzugsweise in der Art bzw. Form eines Katzenbuckels, auf.

Eine radiale Richtung im Sinne der vorliegenden Erfindung erstreckt sich in einer Ausführung in fachüblicher Weise senkrecht zu einer Rotations- bzw. (Haupt)ma-schinenachse des Wellenleistungstriebwerks bzw. der Hochdruckturbine und/oder Niederdruckturbine und/oder senkrecht zu einer Umfangsrichtung um diese Achse, vorzugsweise von der Achse weg.

Durch dieses, in einer Ausführung einzige bzw. globale, radiale Maximum der radial inneren Kontur des Strömungskanals zwischen der stromaufwärtigsten und stromabwärtigsten Stufe der Niederdruckturbine kann vorteilhaft bei gleichem oder klein(er)em Außendurchmesser eine hohe bzw. höhere Umfangsgeschwindigkeit der Niederdruckturbine realisiert und insbesondere dadurch ein sehr hoher Wirkungsgrad der Niederdruckturbine und damit des Wellenleistungstriebwerks erzielt werden.

In einer Ausführung ist die Niederdruckturbine eine zweistufige Niederdruckturbine. Für solche Niederdruckturbinen ist die vorliegende Erfindung, insbesondere aufgrund ihrer axial kurzen Bauweise, besonders vorteilhaft.

In einer anderen Ausführung ist die Niederdruckturbine eine dreistufige Niederdruckturbine. Für solche Niederdruckturbinen mit einer Eintritts- und einer Austrittsstufe und einer einzigen Mittelstufe ist die vorliegende Erfindung aerodynamisch besonders vorteilhaft, insbesondere kann hierdurch eine besonders vorteilhafte Aerodynamik in der Niederdruckturbinen, insbesondere in ihrem mittleren Abschnitt, realisiert werden.

In einer anderen Ausführung weist die Niederdruckturbine mehr als drei Stufen auf. Überraschenderweise ist die vorliegende Erfindung gerade bzw. auch bei mehr als drei Stufen aerodynamisch vorteilhaft, insbesondere kann hierdurch eine vorteilhafte Aerodynamik zwischen mittleren Stufen in der Niederdruckturbinen realisiert werden.

In einer Ausführung ist ein Radius einer radial inneren Kontur des Strömungskanals, insbesondere des Übergangsbereichs, an der stromaufwärtigsten bzw. vordersten Stufe der Niederdruckturbine größer oder gleich einem Radius eines Mittelpunkts eines Querschnitts des Strömungskanals, insbesondere des Übergangsbereichs, an der stromabwärtigsten bzw. letzten Stufe der Hochdruckturbine. Der vorgenannte Mittelpunkt eines Querschnitts des Strömungskanals ist in einer Ausführung ein arithmetischer Mittelpunkt, der von der radial inneren Kontur und der radial äußeren Kontur des Strömungskanals (des Querschnitts des Strömungskanals) an der stromabwärtigsten Stufe der Hochdruckturbine denselben radialen Abstand aufweist.

In einer Ausführung weist eine radial äußere Kontur des Übergangsbereichs (wenigstens, in einer Weiterbildung genau bzw. nur) einen Krümmungswendepunkt auf, in dem
- eine Krümmung dieser Kontur nach radial außen bzw. von einer bzw. der Rotations- bzw. (Haupt)Maschinenachse des Triebwerks, insbesondere der Hoch- und/oder der Niederdruckturbine, weg
   in
- eine Krümmung dieser Kontur nach radial innen bzw. zu dieser Achse hin übergeht, insbesondere eine Tangente an die Kontur in wenigstens einem Axialschnitt, der die Rotations- bzw. (Haupt)maschinenachse des Wellenleistungstriebwerks bzw. der Hochdruckturbine und/oder Niederdruckturbine enthält, eine maximale Steigung bzw. eine maximale radiale Zunahme pro (infinitesimaler) axialer Weglänge in Durchströmungsrichtung aufweist.

Alternativ oder besonders bevorzugt zusätzlich weist in einer Ausführung eine radial innere Kontur des Übergangsbereichs (wenigstens, in einer Weiterbildung genau bzw. nur) einen Krümmungswendepunkt auf, in dem
- eine Krümmung dieser Kontur nach radial außen bzw. von einer bzw. der Rotations- bzw. (Haupt)Maschinenachse des Triebwerks, insbesondere der Hoch- und/oder der Niederdruckturbine, weg
   in
- eine Krümmung dieser Kontur nach radial innen bzw. zu dieser Achse hin übergeht, insbesondere eine Tangente an die Kontur in wenigstens einem Axialschnitt, der die Rotations- bzw. (Haupt)maschinenachse des Wellenleistungstriebwerks bzw. der Hochdruckturbine und/oder Niederdruckturbine enthält, eine maximale Steigung bzw. eine maximale radiale Zunahme pro (infinitesimaler) axialer Weglänge in Durchströmungsrichtung aufweist.

Durch diese, in einer Ausführung schwanenhalsförmig( gekrümmt)e, (radial innere bzw. äußere) Kontur des Übergangsbereichs kann vorteilhaft bei kompakter Bauweise ein sehr hoher Wirkungsgrad des Wellenleistungstriebwerks erzielt werden. Insbesondere kann durch den bzw. die Wendepunkt(e) in Verbindung damit, dass der Radius der radial inneren Kontur des Strömungskanals an der stromaufwärtigsten Stufe der Niederdruckturbine größer oder gleich dem Radius des Mittelpunkts des Querschnitts des Strömungskanals an der stromabwärtigsten Stufe der Hochdruckturbine ist, ein großer radialer Versatz der Niederdruckturbinenschaufeln gegenüber den Hochdruckturbinenschaufeln und damit, insbesondere auf bzw. bei wenig axialer Länge, ein großer bzw. größerer Radius, insbesondere Eintrittsradius, der Niederdruckturbine realisiert werden, der, insbesondere aufgrund der dadurch gering(er)en aeordynamischen Belastung bei Niederdruckturbinen, insbesondere mit drei oder mehr Stufen, zu einem deutlich besseren bzw. sehr hohen Wirkungsgrad führt, insbesondere auch dadurch bedingt, dass zugleich durch den bzw. die Wendepunkt(e) vorteilhafterweise eine axialere Anströmung der stromaufwärtigsten Stufe der Niederdruckturbine realisiert werden kann.

In einer Ausführung ist
- der vorgenannte Krümmungswendepunkt der radial äußeren Kontur des Übergangsbereichs, in dem eine Krümmung nach radial außen in eine Krümmung nach radial innen übergeht; und/oder
- der vorgenannte Krümmungswendepunkt der radial inneren Kontur des Übergangsbereichs, in dem eine Krümmung nach radial außen in eine Krümmung nach radial innen übergeht;
in einem Bereich zwischen 25 % und 75 %, in einer Weiterbildung zwischen 35 % und 65 %, in einer Ausführung zwischen 40 % und 60 %, einer axialen Länge zwischen der stromabwärtigsten Stufe der Hochdruckturbine und der stromaufwärtigsten Stufe der Niederdruckturbine angeordnet, vorzugsweise in der Mitte bzw. zwischen 45 % und 55 % einer axialen Länge zwischen der stromabwärtigsten Stufe der Hochdruckturbine und der stromaufwärtigsten Stufe der Niederdruckturbine.

Ein hier genannter Krümmungswendepunkt ist in einer besonders bevorzugten Ausführung (jeweils) der einzige Krümmungswendepunkt der (jeweiligen radial inneren bzw. äußeren) Kontur des Übergangsbereichs, in dem die Krümmung der Kontur ihre Richtung ändert, was insbesondere dessen Herstellung, Stabilität und/oder Durchströmung verbessern kann. Gleichermaßen kann die (jeweilige bzw. radial innere und/oder äußere) Kontur des Übergangsbereichs auch (jeweils) einen oder mehrere weitere Krümmungswendepunkte, in dem bzw. denen eine Krümmung nach radial außen in eine Krümmung nach radial innen übergeht, und/oder einen oder mehrere Krümmungswendepunkte, in dem bzw. denen eine Krümmung nach radial innen in eine Krümmung nach radial außen übergeht, aufweisen.

In einer besonders bevorzugt Ausführung ist ein Quotient einer Zahl axialer Verdichterstufen ("Verdichteraxialstufenzahl") des Triebwerks, in einer Ausführung einer Zahl axialer Stufen ("Axialstufenzahl") des mit der Hochdruckturbine gekoppelten Verdichters, in einer Weiterbildung einer Gesamtzahl aller axialen Stufen aller Verdichter des Triebwerks, dividiert durch eine Stufenzahl, in einer Ausführung Axialstufenzahl, der Niederdruckturbine kleiner oder gleich 2.

Für solche (im Verhältnis) große bzw. größere Niederdruckturbinen-Stufenzahlen in Verbindung mit (im Verhältnis) klein(er)en Verdichteraxialstufenzahlen, insbesondere des mit der Hochdruckturbine gekoppelten Verdichters bzw. des Wellenleistungstriebwerks, können vorteilhaft besonders hohe Wirkungsgrade der Niederdruckturbine und damit des Wellenleistungstriebwerks erzielt werden.

In einer Ausführung ist die Brennkammer (als) eine Umkehrbrennkammer (ausgebildet), in einer Ausführung so (ausgebildet), dass der Gasstrom seine Richtung wenigstens und/oder höchstens zweimal, vorzugsweise gegensinnig, um mehr als 90°, vorzugsweise wenigstens und/oder höchstens zweimal, vorzugsweise gegensinnig, um wenigstens 140°, in einer Weiterbildung wenigstens und/oder höchstens zweimal, vorzugsweise gegensinnig, um wenigstens 180°, ändert, bevorzugt nicht in der Verbrennungszone.

Durch eine Umkehrbrennkammer kann eine besonders vorteilhafte Durchströmung der Turbinen erreicht werden, wobei die Kombination des radialen Bauraums bzw. Platzbedarfs der Umkehrbrennkammer mit dem Maximum des radialen Abstands der radial inneren Kontur des Strömungskanals von der Rotationsachse des Triebwerks zwischen der stromaufwärtigsten und stromabwärtigsten Stufe der Niederdruckturbine und/oder dem radialen Versatz bzw. großen/größeren Radius der Niederdruckturbine besonders vorteilhaft ist.

Ein erfindungsgemäßes Wellenleistungstriebwerk ist aufgrund der sehr spezifischen Anforderungen an Leistung, Betriebsverhalten, Bauraum, Gewicht und/oder Gewichtsverteilung, ganz besonders als Wellenleistungstriebwerk für einen bzw. eines Hubschrauber(s) geeignet. Entsprechend ist die mit der Niederdruckturbine gekoppelte Abtriebswelle des Triebwerks in einer besonders bevorzugten Ausführung mit wenigstens einem Rotor, insbesondere wenigstens einem Hauptrotor und/oder wenigstens einem Seitenrotor, eines bzw. des Hubschraubers gekoppelt bzw. hierzu eingerichtet bzw. wird hierzu verwendet. Ebenfalls vorteilhaft kann ein erfindungsgemäßes Wellenleistungstriebwerk (als) ein Turboprop-Wellenleistungstriebwerk sein bzw. verwendet werden. Entsprechend ist in einer Ausführung die mit der Niederdruckturbine gekoppelte Abtriebswelle des Triebwerks, in einer Weiterbildung über ein, vorzugsweise drehzahlverminderndes, Getriebe mit wenigstens einem Propeller gekoppelt, wobei ein Schub des Triebwerks vorzugsweise zu wenigstens 80 % von dem bzw. den Propeller(n) erzeugt wird, bzw. ist die Abtriebswelle bzw. das Wellenleistungstriebwerk hierzu eingerichtet bzw. wird hierzu verwendet. Natürlich ist die Erfindung nicht auf diese Anwendungen beschränkt.

In einer Ausführung beträgt eine Drehzahl der Niederdruckturbine bei 100% relativer Drehzahl des Wellenleistungstriebwerks wenigstens 15.000 Umdrehungen pro Minute und/oder höchstens 26.000 Umdrehungen pro Minute beträgt, insbesondere höchstens 22.000 Umdrehungen pro Minute. 100% relative Drehzahl des Wellenleistungstriebwerks ist in einer Ausführung die Drehzahl bei bzw. für take-off Power, vorzugsweise bei internationaler Standardatmosphäre ("international standard atmosphere", ISA). Entsprechend beträgt in einer Ausführung eine Drehzahl der Niederdruckturbine bei Take-Off-Leistung des Hubschrauber-Wellenleistungstriebwerks bei ISA wenigstens 15.000 Umdrehungen pro Minute und/oder höchstens 26.000 Umdrehungen pro Minute beträgt, insbesondere höchstens 22.000 Umdrehungen pro Minute. Bei dieser spezifischen Leistungsklasse kann, insbesondere aufgrund der hier vorliegenden baulichen und aerodynamischen Randbedingungen, eine besonders hohe Wirkungsgradverbesserung erzielt werden.

In einer Ausführung weist das Wellenleistungstriebwerk, vorzugsweise der Verdichter, mit dem die Hochdruckturbine gekoppelt ist, eine radialverdichtende Verdichterendstufe auf, insbesondere kann der mit der Hochdruckturbine gekoppelte Verdichter ein Radialverdichter sein, in den (Arbeits)gas axial, vorzugsweise in wenigstens ein Laufrad, einströmt und dann radial (nach außen) umgelenkt wird.

In einer Ausführung weist das Wellenleistungstriebwerk wenigstens einen weiteren Verdichter auf, der mit der Niederdruckturbine gekoppelt ist. In einer Ausführung, die insbesondere für Hubschrauber-Wellenleistungstriebwerke besonders vorteilhaft sein kann, ist die Niederdruckturbine nicht mit einem Verdichter zum Verdichten von Luft, welche der Brennkammer zugeführt wird, bzw. nicht mit einem Verdichter gekoppelt, welcher wenigstens teilweise in dem Strömungskanal angeordnet ist, in dem der mit der Hochdruckturbine gekoppelte Verdichter angeordnet ist.

Vorzugsweise sind Hoch- und Niederdruckturbine nicht mechanisch miteinander gekoppelt bzw. die Hochdruckturbine nicht mit der Abtriebswelle gekoppelt, mit der die Niederdruckturbine gekoppelt ist, und/oder die Niederdruckturbine nicht mit dem Verdichter gekoppelt, mit dem die Hochdruckturbine gekoppelt ist. Das Wellenleistungstriebwerk kann insbesondere ein ein-, zwei- oder mehrwelliges Wellenleistungstriebwerk sein.

Dadurch kann jeweils, insbesondere in Kombination von zwei oder mehr der vorgenannten Merkmale, ein besonders hoher Wirkungsgrad des Wellenleistungstriebwerks realisiert werden.

Unter einer radial äußeren Kontur wird vorliegend insbesondere die radial äußere Kontur des Strömungskanals bzw. Übergangsbereichs in wenigstens einem Axialschnitt verstanden, der eine bzw. die Rotations- bzw. (Haupt)Maschinenachse des Wellenleistungstriebwerks bzw. der Hoch- und/oder der Niederdruckturbine enthält, unter einer radial inneren Kontur entsprechend insbesondere die radial innere Kontur des Strömungskanals bzw. Übergangsbereichs in wenigstens einem solchen Axialschnitt.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:

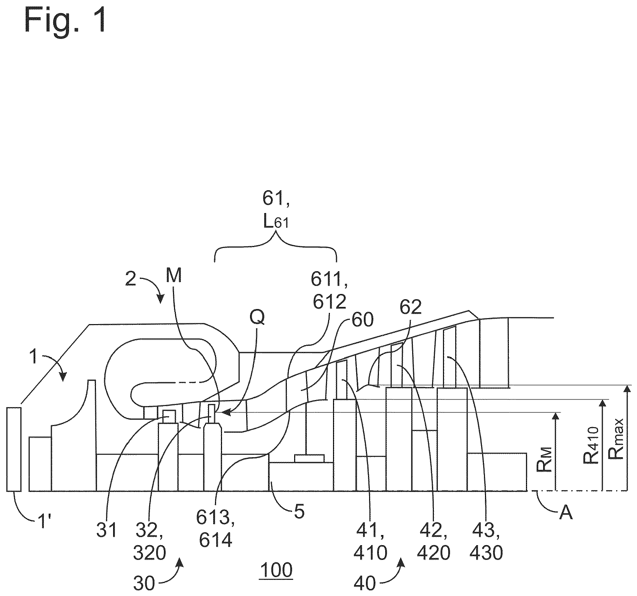

- Fig. 1: ein Wellenleistungstriebwerk eines Hubschraubers nach einer Ausführung der vorliegenden Erfindung.

Fig. 1 zeigt ein Wellenleistungstriebwerk eines Hubschraubers 100 nach einer Ausführung der vorliegenden Erfindung.

Das Wellenleistungstriebwerk weist eine Brennkammer, im Ausführungsbeispiel eine Umkehrbrennkammer 2, eine (in Durchströmungsrichtung, von links nach rechts in Fig. 1) stromabwärts nach der Umkehrbrennkammer 2 angeordnete Hochdruckturbine 30, einen damit gekoppelten Verdichter 1, der stromaufwärts vor der Umkehrbrennkammer 2 angeordnet ist, und eine mit einer Abtriebswelle 5 des Triebwerks gekoppelte Niederdruckturbine 40 auf.

Laufschaufeln 31, 32 der Hochdruckturbine 30 und Laufschaufeln 41, 42 und 43 der Niederdruckturbine 40 sind in einem Strömungskanal 60 angeordnet, der einen Übergangsbereich 61 zwischen einer stromabwärtigsten Stufe 320 mit den Laufschaufeln 32 der Hochdruckturbine 30 und einer stromaufwärtigsten Stufe 410 mit den Laufschaufeln 41 der Niederdruckturbine 40 aufweist.

Die Niederdruckturbine 40 weist außer der stromaufwärtigsten Stufe 410 im Ausführungsbeispiel eine mittlere Stufe 420 mit den Laufschaufeln 42 und eine stromabwärtigste Stufe 430 mit den Laufschaufeln 43 auf, in einer nicht dargestellten Abwandlung kann sie noch eine oder mehrere weitere Stufen aufweisen. In einer anderen, ebenfalls nicht dargestellten Abwandlung kann die Stufe 420 oder die Stufe 430 entfallen.

Eine radial äußere Kontur 611 des Übergangsbereichs 61 weist einen Krümmungswendepunkt 612 auf, in dem eine Krümmung nach radial außen in eine Krümmung nach radial innen übergeht. Eine radial innere Kontur 613 des Übergangsbereichs 61 weist einen Krümmungswendepunkt 614 auf, in dem eine Krümmung nach radial außen in eine Krümmung nach radial innen übergeht.

Diese Krümmungswendepunkte sind in einem Bereich zwischen 25% und 75% einer axialen Länge L₆₁ zwischen der stromabwärtigsten Stufe 320 der Hochdruckturbine und der stromaufwärtigsten Stufe 410 der Niederdruckturbine angeordnet.

Ein Radius R₄₁₀ der radial inneren Kontur des Strömungskanals 60 bzw. Übergangsbereichs 61 an der stromaufwärtigsten Stufe 410 der Niederdruckturbine 40 ist größer oder gleich einem Radius R_{M} eines Mittelpunkts Radius M eines Querschnitts Q des Strömungskanals 60 bzw. Übergangsbereichs 61 an der stromabwärtigsten Stufe 32 der Hochdruckturbine 30.

Ein radialer Abstand einer radial inneren Kontur 62 des Strömungskanals 60 von einer Rotationsachse A des Triebwerks bzw. der Hoch- und/oder der Niederdruckturbine weist zwischen der stromaufwärtigsten Stufe 410 und der stromabwärtigsten Stufe 430 der Niederdruckturbine ein Maximum Rₘₐₓ auf.

Mit dem Bezugszeichen 1' ist schematisiert ein weiterer Verdichter angedeutet, der mit der Niederdruckturbine 40 gekoppelt sein kann. In einer nicht gezeigten Abwandlung des in Fig. 1 gezeigten Ausführungsbeispiels kann dieser weitere Verdichter entfallen, insbesondere die Niederdruckturbine 40 nicht mit einem Verdichter, der in einem mit der Brennkammer verbundenen Strömungskanal angeordnet ist, gekoppelt sein.

In der vorliegenden Offenbarung impliziert "weist ein X auf" allgemein keine abschließende Aufzählung, sondern ist eine Kurzform von "weist wenigstens ein X auf" und umfasst auch "weist zwei oder mehr X auf" sowie "weist außer X auch Y auf", Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1; 1': Verdichter
- 2: Umkehrbrennkammer
- 5: Abtriebswelle
- 30: Hochdruckturbine
- 31; 32: Laufschaufeln
- 320: stromabwärtigste Stufe der Hochdruckturbine
- 40: Niederdruckturbine
- 41: Laufschaufeln
- 410: stromaufwärtigste Stufe der Niederdruckturbine
- 42: Laufschaufeln
- 420: mittlere Stufe der Niederdruckturbine
- 43: Laufschaufeln
- 430: stromabwärtigste Stufe der Niederdruckturbine
- 60: Strömungskanal
- 61: Übergangsbereich
- 611: radial äußere Kontur des Übergangsbereichs
- 612: Krümmungswendepunkt der radial äußeren Kontur 611
- 613: radial innere Kontur des Übergangsbereichs/Strömungskanals
- 614: Krümmungswendepunkt der radial inneren Kontur 613
- 62: radial innere Kontur des Strömungskanals zwischen Stufen 410, 430
- 100: Hubschrauber
- A: Rotationsachse
- Q: Querschnitt des Strömungskanals 60 an der Stufe 32
- L₆₁: axiale Länge zwischen der Stufe 320 und Stufe 410
- M: Mittelpunkt des Querschnitts Q
- Rₘₐₓ: Maximum radialer Abstand Rotationsachse - Kontur 62
- R₄₁₀: Radius der radial inneren Kontur des Strömungskanals 60 an der Stufe 410
- R_{M}: Radius des Mittelpunkts M

## Patentansprüche

1. Wellenleistungstriebwerk, welches einen Verdichter (1), eine Brennkammer (2), eine mit dem Verdichter (1) gekoppelte Hochdruckturbine (30) und eine mit einer Abtriebswelle (5) des Triebwerks gekoppelte Niederdruckturbine (40) aufweist, wobei Laufschaufeln (31, 32, 41, 42, 43) der Hoch- und Niederdruckturbine in einem Strömungskanal (60) angeordnet sind, wobei ein radialer Abstand einer radial inneren Kontur (62) des Strömungskanals von einer Rotationsachse (A) des Triebwerks zwischen einer stromaufwärtigsten Stufe (410) der Niederdruckturbine (40) und einer stromabwärtigsten Stufe (430) der Niederdruckturbine (40) ein Maximum (Rₘₐₓ) aufweist.

2. Wellenleistungstriebwerk nach Anspruch 1, **dadurch gekennzeichnet, dass** die Niederdruckturbine eine zweistufige Niederdruckturbine ist.

3. Wellenleistungstriebwerk nach Anspruch 1, **dadurch gekennzeichnet, dass** die Niederdruckturbine eine dreistufige Niederdruckturbine ist.

4. Wellenleistungstriebwerk nach Anspruch 1, **dadurch gekennzeichnet, dass** die Niederdruckturbine mehr als drei Stufen aufweist.

5. Wellenleistungstriebwerk nach einem der vorhergehenden Ansprüche, **dadurch gekennzeichnet, dass** ein Quotient einer Verdichteraxialstufenzahl des Triebwerks dividiert durch eine Stufenzahl der Niederdruckturbine kleiner oder gleich 2 ist.

6. Wellenleistungstriebwerk nach einem der vorhergehenden Ansprüche, **dadurch gekennzeichnet, dass** die Brennkammer eine Umkehrbrennkammer (2) ist.

7. Wellenleistungstriebwerk nach einem der vorhergehenden Ansprüche, **dadurch gekennzeichnet, dass** es ein Hubschrauber-Wellenleistungstriebwerk ist.

8. Wellenleistungstriebwerk nach einem der vorhergehenden Ansprüche, **gekennzeichnet durch** wenigstens einen weiteren Verdichter (1'), der mit der Niederdruckturbine (40) gekoppelt ist.

9. Wellenleistungstriebwerk nach einem der vorhergehenden Ansprüche 1-7,
**dadurch gekennzeichnet, dass** die Niederdruckturbine (40) nicht mit einem Verdichter gekoppelt ist, der in einem mit der Brennkammer verbundenen Strömungskanal angeordnet ist.

10. Wellenleistungstriebwerk nach einem der vorhergehenden Ansprüche, **gekennzeichnet durch** eine radialverdichtende Verdichterendstufe (1).

11. Wellenleistungstriebwerk nach einem der vorhergehenden Ansprüche, **dadurch gekennzeichnet, dass** eine Drehzahl der Niederdruckturbine bei 100% relativer Drehzahl des Wellenleistungstriebwerks wenigstens 15.000 Umdrehungen pro Minute und/oder höchstens 26.000 Umdrehungen pro Minute beträgt, insbesondere höchstens 22.000 Umdrehungen pro Minute beträgt.

12. Hubschrauber (100) mit einem Wellenleistungstriebwerk nach einem der vorhergehenden Ansprüche.
